Europäisches Patentamt

European Patent Office

Office européen des brevets

(11) Veröffentlichungsnummer: **0 457 211 A2**

## (12) EUROPÄISCHE PATENTANMELDUNG

(21) Anmeldenummer: 91107619.8

(51) Int. Cl.5: **G10K 9/12**

(22) Anmeldetag: **10.05.91**

(30) Priorität: **12.05.90 DE 4015253**

(43) Veröffentlichungstag der Anmeldung:
**21.11.91 Patentblatt 91/47**

(84) Benannte Vertragsstaaten:
**BE DE DK ES FR GB GR IT LU NL**

(71) Anmelder: **Hoechst CeramTec
Aktiengesellschaft
Wilhelmstrasse 14
W-8672 Selb(DE)**

(72) Erfinder: **Berthold, Heinrich
Weinstrasse 13
W-8520 Erlangen(DE)**

Erfinder: **Uhl, Thomas
Hermann-Hesse-Weg 17
W-8672 Selb(DE)**
Erfinder: **Handschuh, Kurt
Lindenstrasse 8
W-8501 Eckental(DE)**
Erfinder: **Wiesend, Georg
In den Weihern 7
W-8561 Henfenfeld(DE)**

(74) Vertreter: **Spiess, Bernhard et al
Hoechst AG Zentrale Patentabteilung
Postfach 80 03 20
W-6230 Frankfurt am Main 80(DE)**

(54) Piezoelektrischer Tongeber und Verfahren zu seiner Herstellung.

(57) Zum Herstellen eines piezoelektrischen Tongebers wird zwischen einer metallisierten Trägerplatte und einer Piezokeramik-Scheibe eine Schicht aus füllerfreiem Kleber aufgebracht, dessen dynamische Viskosität 800 bis 18000 mPa·s beträgt. Das Paket aus Trägerplatte, Kleberschicht und Keramikplatte wird zusammengepreßt, wobei die Menge des Klebers so groß gewählt wird, daß es beim Verpressen zur Ausbildung eines den Rand der Keramikscheibe abdeckenden Wulstes kommt. Danach wird die Klebeschicht zunächst katalytisch oder thermisch und dann durch UV-Bestrahlung ausgehärtet.

Fig. 2

EP 0 457 211 A2

Die Erfindung betrifft einen Ultraschall-verschweißfesten piezoelektrischen Tongeber, der aus einer auf eine metallische Trägerplatte geklebten piezoelektrischen Keramikscheibe besteht, ein Verfahren zu seiner Herstellung und seinen Einbau in ein Piezotongeber-Gehäuse.

Es ist bereits bekannt, piezoelektrische Tongeber durch Aufkleben einer piezoelektrischen Keramikplatte auf eine Metallplatte herzustellen.

Piezoelektrische Tongeber der genannten Art werden in den meisten Anmeldungsfällen in ein Gehäuse montiert, um den erzielbaren Schalldruck-Pegel zu erhöhen oder ein bestimmtes Resonanzverhalten zu erzielen.

Die Montage erfolgt dabei im allgemeinen entweder durch Einkleben oder durch Klemmen mittels Federringe. Die Ringe können gleichzeitig zur Kontaktierung dienen, wobei in diesem Fall am Tongeber keine besonderen mechanischen Belastungen auftreten.

Bei der Montage von Kunststoffgehäusen hat sich jedoch das Ultraschall-Verschweißen als besonders rationelle und zuverlässige Fertigungsmethode erwiesen. Bei diesem Verfahren werden zwei Gehäusehälften aus Kunststoff an ihren Berührungsflächen miteinander verschmolzen. Die benötigte Wärme wird als Reibungswärme an den Grenzflächen durch Ultraschall erzeugt. Im Fall von Tongebergehäusen wird dabei gleichzeitig der einzubauende Tongeber an seinem Rand in der Nähe der Berührungsflächen der beiden Gehäusehälften geklemmt. Es läßt sich nicht vermeiden, daß bei diesem Verfahren durch die auf den Kunststoff aufgebrachte Schwingungsenergie gleichzeitig der Tongeber zum Mitschwingen angeregt und so einer erheblichen Belastung ausgesetzt wird.

Bei Tongeber-Elementen, die nach dem Stand der Technik gefertigt werden, führt das Ultraschall-Verschweißen in ca. 2 % der Fälle zu Randausbrüchen, Rissen und damit zur Funktionsunfähigkeit der Piezokeramik.

Es bestand daher die Aufgabe, ein Herstellungsverfahren zu finden, mit dem sich piezoelektrische Tongeber herstellen lassen, die mechanisch so stabil sind, daß sie den Einbau in Kunststoffgehäuse durch Ultraschall-Verschweißen ohne Schädigung zu praktisch 100 % überstehen.

Die Aufgabe wird erfindungsgemäß dadurch gelöst, daß zwischen einer metallisierten piezokeramischen Scheibe und einer etwas größeren Trägerplatte eine Schicht aus füllerfreiem Kleber aufgebracht wird, dessen dynamische Viskosität 800 bis 18000 mPa·s beträgt. Dann wird das Paket aus Trägerplatte, Kleberschicht und Keramikplatte zusammengepreßt, wobei die Menge des Klebers so groß gewählt wird, daß es beim Verpressen zur Ausbildung eines den Rand der Keramikscheibe abdeckenden Wulstes kommt. Danach wird die Kleberschicht zunächst katalytisch oder thermisch und dann in der zweiten Stufe durch UV-Bestrahlung ausgehärtet. Nach dem Stand der Technik wird der Kleber durch Siebdruck in geringerer Menge aufgebracht und einstufig ausgehärtet.

Die verwendete piezokeramische Scheibe ist beidseitig metallisiert. Ihre Form ist für das Verfahren nicht wesentlich. Möglich sind z.B. rechteckige, dreieckige, regelmäßig n-eckige Scheiben. Bevorzugt sind kreisförmige Scheiben. Ihre Rauhigkeit $R_a$ liegt bei 0,5 bis 2 $\mu$m. Wenn die verwendete Kleberschicht etwa ebenso dick ist, kommt es zum elektrischen Kontakt zwischen metallischer Trägerplatte und Metallisierung der piezokeramischen Scheibe. Wenn die Kleberschicht dicker ist, kann die piezokeramische Scheibe mangels Stromversorgung ihren Dienst nicht erfüllen.

Die Dicke der Piezoschicht liegt vorzugsweise im Bereich zwischen 100 $\mu$m und 300 $\mu$m, die Dicke der Trägerplatte aus Metall vorzugsweise zwischen 50 und 400 $\mu$m. Der Durchmesser der Piezoschicht liegt vorzugsweise zwischen 10 und 40 mm, der Durchmesser der Trägerplatte aus Metall vorzugsweise zwischen 12 und 50 mm. Es ist vorteilhaft, wenn der Durchmesser der kreisförmigen Metallplatte um mindestens 2 mm und nicht mehr als 30 mm größer ist als der Durchmesser der kreisförmigen Piezokeramik-Scheibe.

Vorzugsweise wird das Paket aus Trägerplatte, Kleberschicht und Keramikplatte mit einem Druck von 3 bis 6 bar zusammengepreßt. Die Dauer des Zusammenpressens soll mindestens eine halbe Sekunde betragen. Längeres Zusammenpressen ist unschädlich.

Als Kleber für die füllerfreie Kleberschicht eignen sich vorzugsweise Ein-Komponenten-Kleber, beispielsweise ein Methacrylatharz, insbesondere ein Urethanmethacrylatharz.

Der eingesetzte Kleber härtet besonders rasch in engen Spalten aus. Wenn er nur einstufig (d.h. thermisch oder katalytisch) ausgehärtet wird, so haftet zwar die Keramik am Metall, aber der Wulst ist nicht völlig ausgehärtet und daher noch klebrig. Durch die zusätzliche Behandlung mittels UV-Bestrahlung wird ein durchgehärteter Wulst mit trockener Oberfläche erhalten.

Die erfindungsgemäßen piezoelektrischen Tongeber sind mechanisch sehr stabil. Auch bei Einwirken von Ultraschall kommt es nicht zum Absplittern von Keramikteilchen, insbesondere in den Randzonen. Dies ist von Vorteil, da die beiden Hälften eines als Resonator dienenden Tongeber-Gehäuses üblicherweise mittels Ultraschall verschweißt werden. Die nach dem Stand der Technik gefertigten Tongeber erleiden durch die Ultraschallverschweißtechnik teilweise (ca. 2 % der Fälle) Randausbrüche an der Keramikscheibe und werden damit unbrauchbar. Dies gilt nicht für die erfindungsgemäßen piezoelektrischen Tongeber.

Messungen haben gezeigt, daß der Klebstoffwulst akustisch keine Nachteile bringt Er wirkt sich aber mechanisch und fertigungstechnisch stabilisierend auf das Tongeberelement aus.

Die Erfindung wird durch das Beispiel näher erläutert.

## Beispiel

Es werden 0,02 g eines Urethanmethacrylatklebers mit einer Viskosität von ca. 1000mPa•s in das Zentrum einer Messingronde mit einem Durchmesser von 46 mm dosiert.

Es wird nun eine geeignete Piezokeramikronde mit einem Durchmesser von 25 mm konzentrisch aufgesetzt und es werden Metallronde und Keramik mittels eines Stempels mit einem Durchmesser von 24 mm und einem Druck von 4,5 bar miteinander verpreßt. Dabei verteilt sich der Klebstoff im Spalt zwischen beiden Teilen und überschüssiger Klebstoff bildet einen Wulst am Rand der Keramikscheibe. Der Kleber wird so dosiert, daß kein Klebstoff auf die freie Oberfläche der Keramik gelangt.

Der Tongeber durchläuft nun eine kombinierte Aushärtestrecke, die aus einem thermischen und einem UV-Strahlungsteil besteht. Im thermischen Teil wird bei etwa 80°C der Klebstoff im Spalt zwischen Metallronde und Keramikscheibe ausgehärtet.

Der UV-Strahlungsteil härtet den Klebewulst sowohl in der Tiefe (Wellenlängen zwischen 300 und 400 nm) als auch an der Oberfläche (Wellenlängen unter 300 nm).

Der so gefertigte Tongeber zeichnet sich durch hohe mechanische Stabilität aus, ist bis zu sehr hohen Schalldruckpegeln funktionsfähig und ist ultraschallverschweißfest.

Der erfindungsgemäße piezoelektrische Tongeber eignet sich vorzüglich zum Einbau in ein Piezotongeber-Gehäuse aus thermoplastischem Kunststoff. Hierzu werden die zwei Hälften eines Kunststoff-Resonatorgehäuses verwendet, die je einen kreisförmigen Rand besitzen, wobei der kreisförmige Rand der einen Hälfte eine Ausnehmung zur Aufnahme der Tongeberscheibe und des mit einem Rücksprung versehenen kreisförmigen Randes der anderen Hälfte aufweist. Eine erfindungsgemäß hergestellte Tongeberscheibe wird in die Ausnehmung der einen Hälfte des Gehäuses eingesetzt und dann die andere Hälfte des Gehäuses auf die Hälfte aufgesetzt, so daß das Gehäuse geschlossen ist. Die Tongeber-Scheibe ist somit zwischen den Gehäusehälften festgeklemmt. Dann werden die Hälften durch kurzzeitiges Einwirken von Ultraschall unter leichtem Druck senkrecht zur Scheibe verschweißt.

Die Verbindung von Kunststoffen durch Ultraschall geschieht durch Reibung an der Berührungsfläche der zu verbindenden Teile. Die Reibung wird dadurch erzeugt, daß ein vibrierendes Werkzeug, genannt Sonotrode, mit einer Frequenz von etwa 20 kHz senkrecht auf die Oberfläche eines der zu verbindenden Teile aufgebracht wird.

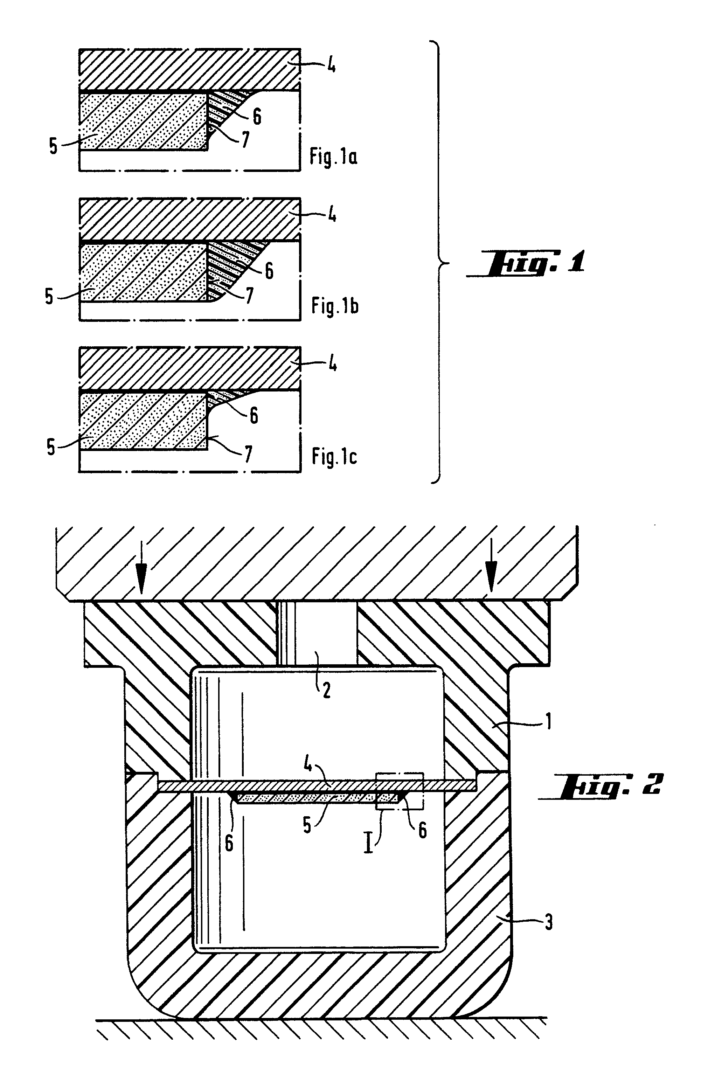

In Figur 1 sind mehrere Ausgestaltungen des Wulstes dargestellt. Der Wulst aus ausgehärtetem Kleber (6) soll die Mantelfläche (7) der zylindrischen Piezokeramik-Scheibe (5), die auf der Metallscheibe (4) aufgeklebt ist, mindestens zu 2/3 bedecken. Wulste wie in Figur 1a und 1b sind erfindungsgemäß. Ein Wulst wie in Figur 1c, bei dem weniger als 50 % der Mantelfläche der piezokeramischen Scheibe durch Kleber abgedeckt werden, liefert dagegen unzuverlässige Ergebnisse.

In Figur 2 ist die Anordnung von Kunststoff-Hälften und Piezoscheibe beim Ultraschall-Verschweißen dargestellt. Der obere Teil 1 des Gehäuses kann eine Austrittsöffnung (2) für den später durch die Piezokeramik erzeugten Schall aufweisen. Zwischen oberem Teil 1 und unterem Teil 3 des Gehäuses ist die Metallscheibe (4) mit aufgeklebter Keramikschicht (5) eingeklemmt.

## Patentansprüche

1. Verfahren zum Herstellen eines Tongebers bestehend aus einer metallisierten piezokeramischen Schiebe, die auf einer größeren metallischen Trägerplatte aufgeklebt ist, dadurch gekennzeichnet, daß zwischen Trägerplatte und Keramikscheibe eine Schicht aus füllerfreiem Kleber aufgebracht wird, dessen dynamische Viskosität 800 bis 18000 mPa•s beträgt, man das Paket aus Trägerplatte, Kleberschicht und Keramikplatte zusammenpreßt, wobei die Menge des Klebers so groß gewählt wird, daß es beim Verpressen zur Ausbildung eines den Rand der Keramikscheibe abdeckenden Wulstes kommt, und man danach die Klebeschicht zunächst katalytisch oder thermisch und dann durch UV-Bestrahlung aushärtet.

2. Piezoelektrischer Tongeber bestehend aus einer kreisförmigen metallisierten piezokeramischen Scheibe, die mit einem Kleber auf einer größeren metallischen Trägerplatte aufgeklebt ist, dadurch gekennzeichnet, daß der Kleber füllerfrei ist und die Dicke der Kleberschicht in der Größenordnung der Oberflächenrauhigkeit von metallisierter Keramik und Trägerplatte liegt und der Rand der Keramikscheibe durch einen Wulst aus ausgehärtetem Kleber umgeben ist.

3. Tongeber gemäß Anspruch 1, dadurch gekennzeichnet, daß der ausgehärtete Kleber ein ausgehärtetes Methacrylatharz, insbesondere ein ausgehärtetes Urethanmethacrylatharz ist.

4. Verfahren zum Einbau einer kreisförmigen piezoelektrischen Tongeberscheibe in einen aus Kunststoff bestehendes zylinderförmiges Piezotongeber-Gehäuse, dadurch gekennzeichnet, daß man ein Tongeber-Gehäuse verwendet, das aus zwei Hälften besteht, die beide einen kreisförmigen Rand besitzen, wobei der kreisförmige Rand der einen Hälfte eine Ausnehmung zur Aufnahme der Tongeberscheibe und des mit einem Rücksprung versehenen kreisförmigen Randes der anderen Hälfte aufweist, man eine gemäß Anspruch 2 hergestellte Tongeberscheibe in die Ausnehmung der einen Hälfte des Gehäuses einsetzt, man die andere Hälfte aufsetzt, so daß das Gehäuse geschlossen und die Tongeber-Scheibe durch die Hälften des Gehäuses festgeklemmt ist und man die Hälften durch Einwirkung von Ultraschall miteinander verschweißt.

5
Fig.1a

5
6
7
Fig.1b

5
6
7
Fig.1c

Fig. 1

Fig. 2